Europäisches Patentamt

European Patent Office

Office européen des brevets

(11) Veröffentlichungsnummer: **0 085 174**
**B1**

(12) **EUROPÄISCHE PATENTSCHRIFT**

(45) Veröffentlichungstag der Patentschrift: **28.09.88**

(21) Anmeldenummer: **82111730.6**

(22) Anmeldetag: **17.12.82**

(51) Int. Cl.⁴: **G 02 B 27/58**, G 01 J 9/02

(54) **Vorrichtung zur Erkennung weit entfernter, elektromagnetisch strahlender Objekte.**

(30) Priorität: **03.02.82 DE 3203528**

(43) Veröffentlichungstag der Anmeldung:
**10.08.83 Patentblatt 83/32**

(45) Bekanntmachung des Hinweises auf die
Patenterteilung:
**28.09.88 Patentblatt 88/39**

(84) Benannte Vertragsstaaten:
**CH DE FR GB IT LI SE**

(56) Entgegenhaltungen:
**JOURNAL OF THE OPTICAL SOCIETY OF
AMERICA, band 69, Nr. 1, Januari 1979, Seiten
187-191, New York, US; H.P. GUSH:"Optical
imaging using aperture synthesis"**
**PROCEEDING OF THE IEEE, Band 61, Nr. 9, 9
September 1973, New York, US; D.J.
MCLEAN:"A proposed millimeter
radioheliograph"**

(73) Patentinhaber: **Bodenseewerk Gerätetechnik
GmbH
Alte Nussdorfer Strasse 15 Postfach 1120
D-7770 Überlingen/Bodensee (DE)**

(72) Erfinder: **Valentin, Ernst, Dr.rer.nat.
Sonnenberg 6
D-7770 Überlingen (DE)**

(74) Vertreter: **Weisse, Jürgen, Dipl.-Phys. et al
Bökenbusch 41 Postfach 11 03 86
D-5620 Velbert 11-Langenberg (DE)**

(56) Entgegenhaltungen:
**PROCEEDINGS OF THE IEEE, Band 61, Nr. 9,
September 1973, New York, US; J.W.M.
BAARS et al.:"The synthesis radio telescope at
westerbork"**

Courier Press, Leamington Spa, England.

**Beschreibung**

Die Erfindung betrifft eine Vorrichtung zur Erkennung weit entfernter, elektromagnetisch strahlender Objekte, enthaltend

(a) eine Mehrzahl von auf die Strahlung des Objekts ansprechenden, zweidimensional in fester relativer Lage zueinander angeordneten Detektoren und

(b) eine Zielobjektvermessungsschaltung, auf welche die Signale der Detektoren aufgeschaltet sind und welche ein aus den Signalen abgeleitetes Muster mit Mustern bekannter Objekte vergleicht.

Bekannte Einrichtungen zur automatischen Objekterkennung enthalten ein Raster von Detektoren, auf dem durch ein optisches Abbildungssystem ein optisches Bild eines das Objekt enthaltenden Gesichtsfelds erzeugt wird. Die Detektorsignale bilden ein Muster von Grau- oder Farbwerten, das diesem optischen Bild entspricht. Dieses Muster wird durch einen Rechner mit gespeicherten, gleichartigen Mustern bekannter Objekte verglichen. Dadurch kann das beobachtete Objekt einer bestimmten Klasse von Objekten zugeordnet, also "erkannt" werden.

Bei sehr weit entfernten Objekten bietet die Objekterkennung über ein optisches System Schwierigkeiten, gleichgültig ob das Objekt visuell oder über ein Raster von Detektoren beobachtet wird. Diese Schwierigkeiten haben die folgenden Ursachen:

Die Auflösung eines optischen Abbildungssystems hängt von dessen Apertur ab. Optische Systeme mit sehr großer Öffnung sind sehr aufwendig. Ihre Leistung ist außerdem durch thermische Einflüsse und Probleme der mechanischen Stabilität beeinträchtigt und schließlich durch diese beschränkt. Ein weiterer Faktor, der die Erkennung weit entfernter Objekte erschwert, ist die Unschärfe, die sich durch unkontrollierte Bewegungen des optischen Abbildungssystems (Wackeln) und durch unkontrollierbare Brechungen der Lichtstrahlen in der im allgemeinen turbulenten Atmosphäre (Flimmern) ergibt.

Es ist ein als "Intensitäts-Interferometer" bezeichnetes Gerät zur Bestimmung der Durchmesser von Fixsternen bekannt (R. Hanbury Brown "The Intensity Interferometer, its Application to Astronomy", Verlag Taylor u. Francis Ltd., London). Dabei sind zwei photoelektrische Detektoren, die über je einen auf den Fixstern gerichteten Hohlspiegel von der Strahlung dieses Fixsterns beaufschlagt sind, auf einen Korrelator geschaltet. Die Korrelation der von den beiden Detektoren gelieferten Signale wird gemessen. Sie hängt ab von der Kohärenz der auf die beiden Detektoren fallenden Strahlung. Aus dem Verlauf dieser Korrelation in Abhängigkeit vom Abstand der Detektoren kann unter der Annahme, daß der Fixstern als kreisrunde Scheibe erscheint, der winkelmäßige Durchmesser des Fixsterns berechnet werden. Objekte, deren Intensitätsverteilung nicht als Kreisscheibe vorausgesetzt werden kann (z.B. unbekannte Objekte), könnten mit einer solchen Anordnung nur sehr partiell erfaßt werden.

Der Erfindung liegt die Aufgabe zugrunde ein Gerät zur Erkennung sehr weit entfernter, mit konventionellen Mitteln der Optik praktisch nicht mehr auflösbarer, elektromagnetisch inkohärent (z.B. thermisch) strahlender Objekte zu schaffen, das von durch mechanische oder durch Luftbrechung bedingten, scheinbaren Schwankungen des Objekts gegenüber dem Gerät nicht beeinflußt wird.

Es soll weiterhin die Erkennung entfernter Objekte ohne übermäßigen optischen und mechanischen Aufwand ermöglicht werden.

Ausgehend von einer Vorrichtung der eingangs definierten Art wird diese Aufgabe dadurch gelöst, daß die Zielobjektvermessungsschaltung

(c) eine Mehrzahl von Korrelatoren aufweist, von denen jeder die Signale eines Paares von Detektoren miteinander korreliert, und

(d) Mittel zum Vergleichen eines von den Korrelationswerten gebildeten Musters mit gleichartigen Mustern bekannter Objekte.

Es wird somit als "Muster" nicht das optische Bild des Objekts erzeugt, sondern ein Muster, das sich aus den Korrelationen verschiedener Detektorsignalpaare ergibt. Dieses Muster, das nicht einem optischen Bild des Objekts entspricht sondern, wie unten gezeigt wird. Punkten der Fouriertransformierten der Autokorrelationsfunktion der Bildhelligkeit, kann ebenfalls dazu dienen, durch Vergleich mit .entsprechenden Mustern bekannter Objekte das beobachtete Objekt einer bestimmten Klasse von Objekten zuzuordnen und in diesem Sinne zu "erkennen". Das so erhaltene Muster hat weiterhin den Vorteil, daß es gegen Relativbewegungen von Objekt und Gerät invariant ist, sofern das Objekt im Gesichtsfeld des Geräts verbleibt. Die Objekterkennung wird also nicht durch Schwankungen des Geräts oder durch die Lichtbrechung beeinträchtigt, die nur scheinbare Bewegungen des Objekts innerhalb des Gesichtsfeldes bewirken. Es läßt sich bei entsprechender Anordnung der Detektoren eine hohe Auflösung erreichen, wie sie sonst nur mit optischen Geräten mit sehr großem Durchmesser der Apertur erzielbar wäre. Die Anforderungen an die mechanische Präzision der Anordnung sind dabei aber trotzdem relativ gering.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert:

Fig. 1 ist eine schematische Darstellung einer "elektronischen Linse" mit fünf regelmäßig auf einem Kreis angeordneten Detektoren, die über Korrelatoren jeder mit jedem korreliert sind.

Fig. 2 zeigt die Lage von Objekt- und Detektorebene und veranschaulicht die in der Beschreibung benutzten Bezeichnungen.

Fig. 3 dient der Veranschaulichung gewisser Betrachtungen in der nachfolgenden Beschreibung und zeigt eine Kreislinie, auf der Detektoren angeordnet sind.

Fig. 4 zeigt die Punkte $K_{ij}$, für die die Werte der Fouriertransformierten der Autokorrelationsfunktionen der Bildintensität durch die gleichnamigen Korrelatoren $K_{ij}$ ermittelt werden.

Die beschriebene Vorrichtung von Detektoren und Korrelatoren wird in folgendem auch als "elektronische Linse" bezeichnet, weil sie wesentliche Funktionen einer Linse sehr hoher Auflösung mit rein elektronischen Mitteln zu erzielen gestattet.

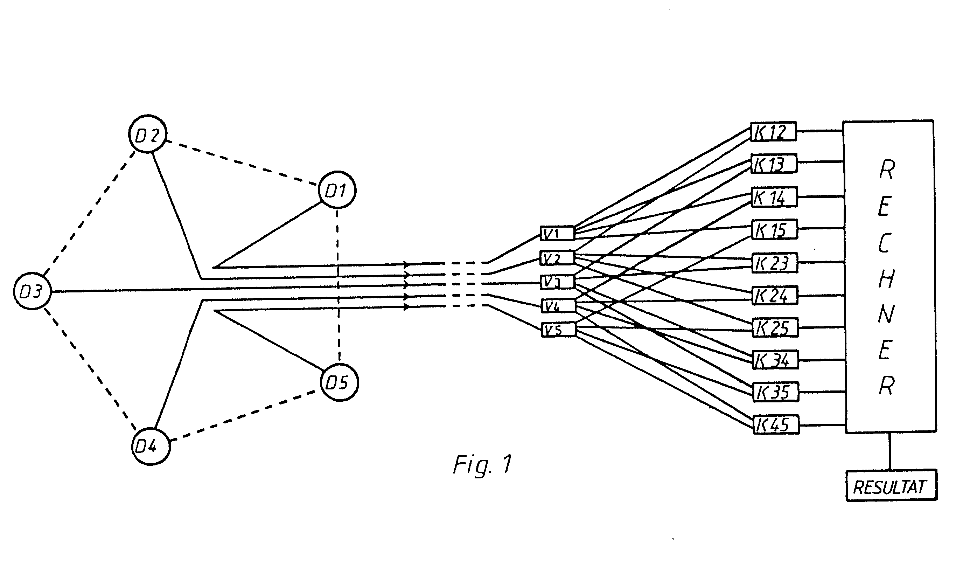

Die "elektronische Linse" von Fig. 1 enthält fünf Detektoren $D_1$, $D_2$, $D_3$, $D_4$ und $D_5$, die alle über Reflektoren o.dgl. Strahlung von einem zu erkennenden Objekt empfangen. Die Detektoren $D_1$, $D_2$, $D_3$, $D_4$ und $D_5$ sind in regelmäßiger Anordnung auf einem Kreis angeordnet, so daß sie die Ecken eines gedachten, in Fig. 1 gestrichelt angedeuteten Fünfecks bilden.

Die Signale der fünf Detektoren $D_1$ bis $D_5$ werden durch Verteiler und Verstärker $V_1$ bis $V_5$ verstärkt und dann so auf $n(n-1)/2 = 10$ Korrelatoren $K_{12}$, $K_{13}$, $K_{14}$, $K_{15}$, $K_{23}$, $K_{24}$, $K_{25}$, $K_{34}$, $K_{35}$ und $K_{45}$ aufgeschaltet, so daß die Signale jedes Detektors $D_1$ bis $D_5$ mit den Signalen jedes anderen Detektors korreliert werden. Es entstehen so zehn Korrelationssignale $Q_{ij}$, die ein "Muster" von Korrelationswerten bilden, das einem Rechner zugeführt wird. Der Rechner vergleicht das Muster mit entsprechenden Mustern bekannter Objekte und führt so eine Zuordnung des beobachteten Objekts zu einer bestimmten Klasse von Objekten, z.B. bestimmten Flugzeugen in einer bestimmten Entfernung unter einen bestimmten Aspektwinkel, durch, die als Resultat, wie in Fig. 1 angedeutet, ausgegeben wird.

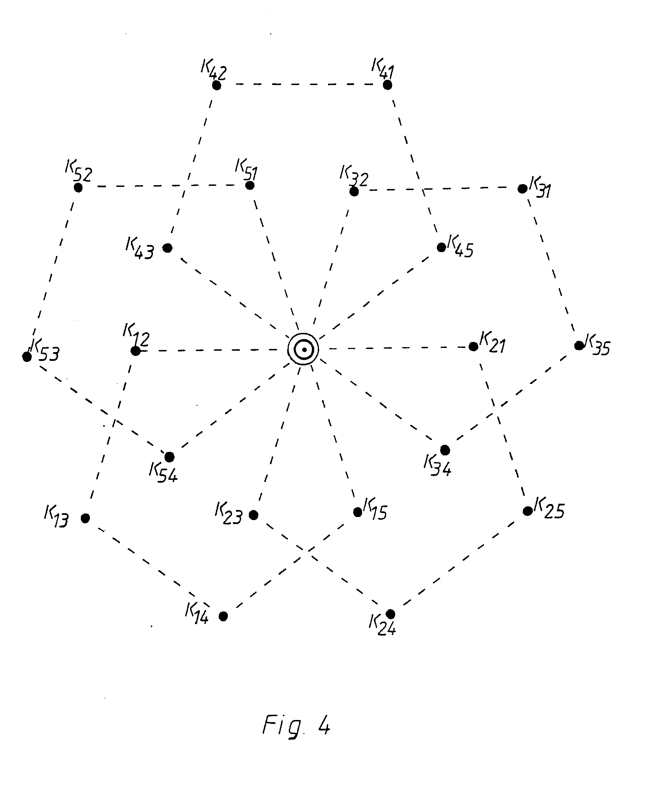

Fig. 4 zeigt eine anschauliche Deutung des "Musters". Ordnet man den Paaren $(D_i, D_j)$ von Detektoren von Fig. 1, wie in Fig. 4 dargestellt, Punkte $K_{ij}$ zu, wobei z.B. dem Punkt $K_{41}$ das gleiche Signal zugeordnet wird wie dem Punkt $K_{14}$, so ergeben sich Stützpunkte der Fouriertransformierten $\bar{A}(u, v)$ der Autokorrelationsfunktion der Intensitätsverteilung $I(x, y)$ in der Objektebene.

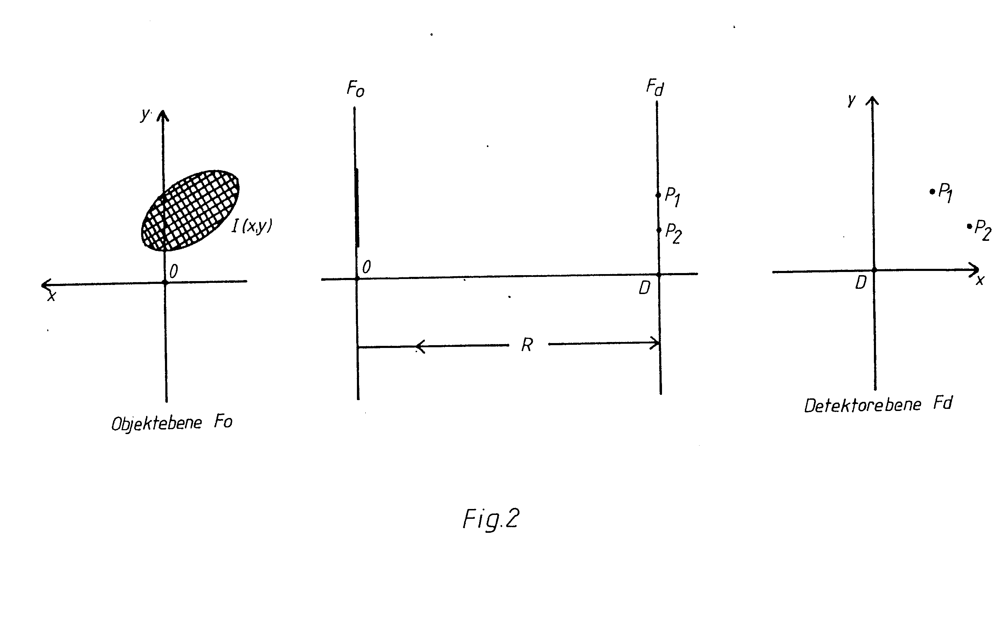

Fig. 2 zeigt die Objektebene $F_o$ mit den Koordinaten x und y und die Detektorebene $F_d$ mit den Koordinaten X und Y. In der Objektebene $F_o$ befindet sich ein Objekt, das eine Intensitätsverteilung $I(x, y)$ liefert. In der Detektorebene befinden sich Detektoren in den Punkten $P_1$, $P_2$...., $P_5$.... Der Abstand zwischen Objektebene $F_o$ und Detektorebene $F_d$ ist R.

Die Erfindung beruht auf den folgenden physikalischen Grundlagen: Die wesentlichen Meßgrößen des Verfahrens sind die Beträge der wechselseitigen komplexen Kohärenzgrade ("Principles of Optics" 2. Aufl. M. Born u. E. Wolf. Verlag Pergamon Press, London 1964) $|\gamma(P_i, P_j)|$ in den durch Detektoren $D_i$, $D_j$ besetzten Punktepaaren $P_i$, $P_j$ der Detektorebene $F_d$ (vgl. Fig. 2), die gleichzeitig die "optische Achse" DO der Anlage, die Normale durch einen beliebigen Ursprung D in $F_d$, definiert. Nach dem Theorem von van Zittert und Zernike ist $|\gamma(P_i, P_j)|$ im wesentlichen durch die Fouriertransformierte $\bar{I}(u, v)$ der Intensitätsverteilung $I(x, y)$ in der Objektebene $F_o$ gegeben. $F_o$ ist als Ebene durch das Objekt senkrecht zur optischen Achse DO, mit Ursprung O im Schnittpunkt mit dieser, definiert. Genauer gilt

$$(1) \quad |\gamma(P_i, P_j)| = \frac{\left| \int dx \int dy \ I(x,y) \ \exp\ (-ik(px+qy)) \right|}{\int dx \int dy \ I(x,y)}$$

mit

$$(2) \quad p := |X_i - X_j| / R, \quad q := |Y_i - Y_j| / R.$$

Dabei sind $(X_i, Y_i)$ und $(X_j, Y_j)$ die Koordinaten der Punkte $P_i$ und $P_j$ bezüglich eines kartesischen Koordinatensystems in der Detektorebene $F_d$ mit Ursprung D. x, y sind die Koordinaten eines Punktes in der Objektebene $F_o$ bezüglich eines kartesischen Koordinatensystems mit Ursprung in O, dessen Achsen parallel zu den Koordinatenachsen des Systems in der Detektorebene liegen. R ist der Abstand zwischen Objekt- und Detektorebene. $k = 2\pi/\lambda$ bezeichnet die Länge des Wellenvektors, $\lambda$ die Wellenlänge des benützten, im wesentlichen als monochromatisch angenommenen Lichtes. Mit $u := kp$, $v := kq$ stellt das Integral im Zähler von Gleichung (1) in der Tat im wesentlichen die Fouriertransformierte $\bar{I}(u, v)$ von $I(x, y)$ dar.

Bring man an den Orten der Punkte $P_i$ und $P_j$ kleine Öffnungen an und stellt hinter $F_d$ einen zu $F_d$ parallelen Schirm auf, so kann man $|\gamma(P_i, P_j)|$ grundsätzlich als Kontrast (fringe visibility) des entstehenden Interferenzmusters beobachtet. Auf diesem Prinzip der Interferenz beruhen letztlich sämtliche konventionellen Verfahren der optischen Abbildung durch Spiegel und Linsen bis hin zur höchstauflösenden Interferenzinterferometrie.

Eine grundsätzliche andere Möglichkeit zur Messung von $|\gamma(P_i, P_j)|$ besteht darin, daß man Detektoren an die Stellen der Punkte $P_i$, $P_j$ setzt und die entstehenden Photoströme korreliert. Das ist die Idee der Intensitätsinterferometrie nach Hanbury Brown und Twiss, die sich wegen der in Wegfall kommenden optischen Wege durch sehr geringe Störanfälligkeit bei fast unbegrenzter Auflösung auszeichnet.

Die Meßgröße $|\gamma(P_i, P_j)|$ zeichnet sich durch eine Reihe von Eigenschaften aus, die die Funktionsweise der Erfindung wesentlich bestimmen: Sei $I'(x, y) := I(x - x', y - y')$ die Intensitätsverteilung eines Objektes S', das gegenüber dem Objekt S mit der Intensitätsverteilung I(x, y) nur um den Vektor (x' y') versetzt ist. Dann gilt für das versetzte Objekt S'

$$|\gamma'(P_i, P_j)| = \frac{\left|\int dx \int dy\; I'(x,y)\; \exp(-ik(px+qy))\right|}{\int dx \int dy\; I'(x,y)} \qquad (3)$$

$$= \left|\exp(-ik(px'+qy'))\right. \qquad \times$$

$$\left.\frac{\int dx \int dy\; I(x-x',y-y')\exp(-ik(p(x-x')+q(y-y')))}{\int dx \int dy\; I(x-x',\;y-y')}\right|$$

Man denke sich jegzt x: = x − x' und y: = y − y' als neue Integrationsvariablen eingeführt. Da der Faktor vor dem Integral wegen der Absolutstriche keine Wirkung auf das Resultat besitzt, ergibt sich durch Vergleich mit (1)

$$(4) \qquad |\gamma'(P_i, P_j)| = |\gamma(P_i, P_j)| \quad,$$

oder, in Worten: Eine beliebige Versetzung (x', y') eines Objekts S in der Objektebene $F_o$ wirkt sich auf die Meßgröße $\gamma(P_i, P_j)$ nicht aus! Da $\gamma(P_i, P_j)$ nur von den Differenzen $|X_i - X_j|$, $|Y_i - Y_j|$ abhängt, gilt auch die folgende Aussage: Eine Versetzung eines beliebigen Detektorpaares in der Detektorebene $F_d$ derart, daß Richtung und Abstand von $P_i$ nach $P_j$ gleich bleibt, hat keinen Einfluß auf die Meßgröße $|\gamma(P_i, P_j)|$.

Quadriert man Gleichung (1) und bringt den Nenner der rechten Seite auf die linke, so entsteht rechts mit u: = k.p, v: = k.q die Fouriertransformierte $\bar{A}(u, v) = |\bar{I}(u, v)|^2$ der Autokorrelationsfunktion

$$(5) \quad A(x,y) = \int dx' \int dy'\; I(x'-x,y'-y)\; I(x', y')$$

der Intensität I(x, y) in der Objektebene. Da die linke Seite nur Meßgrößen enthält, wobei der erwähnte Nenner nur eine unerhebliche, gegebenenfalls meßbare, Konstante ist, kann man im Idealfall einer "dichten" Besetzung der Detektorebene offenbar die Autokorrelationsfunktion A(x, y) vollständig vermessen.

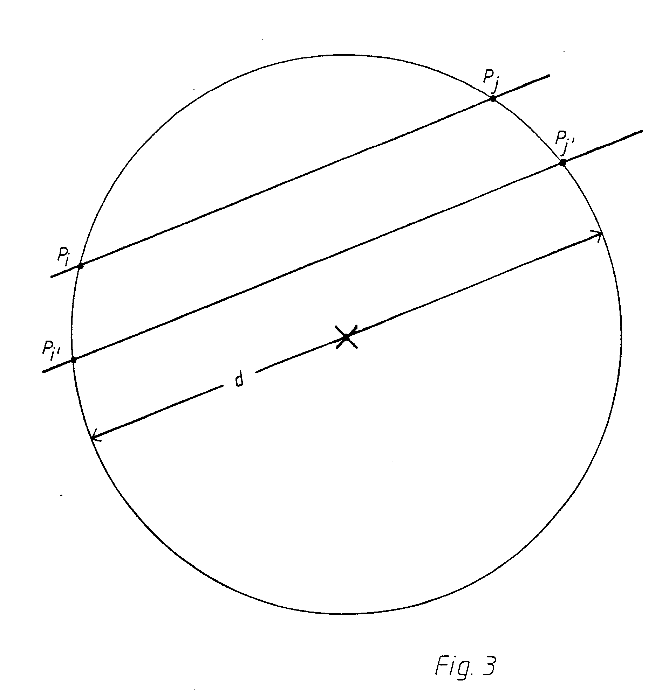

Eine "dichte Besetzung" der Detektorebene ist hierfür aber nicht notwendig, wie das folgende Beispiel zeigt: Man denke sich nur die Punkte P auf einer Kreislinie mit Durchmesser d mit Detektoren "dicht" besetzt und korreliere vorerst nur die Detektorpaare auf den Endpunkten $P_i, P_j$ einer Schar paralleler Sehnen, vgl. Fig. 3. Da offenbar sämliche Detektorabstände zwischen O und d vorkommen und weil die Parallelversetzung der korrelierten Paare ohne Belag ist, liefern diese Detektorpaare die gleichen Meßwerte wie die Gesamtheit aller Detektorpaare, die man auf der größten Sehne, d.h. auf dem Kreisdurchmesser parallel zu der herausgegriffenen Sehnenschar, unterbringen könnte. Diese liefern aber nach (2) die Werte $\bar{A}(u, v) = \bar{A}(kp, kq)$ für die Punkte (u, v) auf einer Strecke der Länge 2dk/R und parallel zu der in Rede stehenden Schar von Sehnen. Der Faktor 2 ergibt sich aus der Symmetrie $\bar{A}(u, v) = \bar{A}(-u, -v)$, die offenbar besagt, daß jede Detektorpaarung zwei Stützpunkte der Funktion $\bar{A}(u, v)$ mit Funktionswerten versieht. Korreliert man schließlich jeden Punkt der Kreislinie mit jedem, betrachtet man also alle möglichen Sehnenscharen, so erhält man offenbar die Werte der Funktion $\bar{A}(u, v)$ für sämtliche Punkte (u, v) aus der Fläche eines Kreises mit Durchmesser 2kd/R = 4πd/λR. Eine dichte Detektorbesetzung des Kreisumfangs liefert also die gleichen Meßwerte wie eine dichte Besetzung des Kreisinneren; letzteren würde die gleichen Meßwerte nur mehrfach liefern.

Eine "dichte" Besetzung einer Linie oder gar einer Fläche mit Detektoren ist technisch selbstverständlich nicht möglich. Mit endlich vielen, etwa n, Detektoren erhält man nur die reellen und nichtnegativen Werte $Q_{ij}$ der Fouriertransformierten $\bar{A}(u, v)$ von A(x, y) in maximal n(n − 1) Stützpunkten (u, v) = k(p, q), wobei p = p(i, j), q = q(i, j) durch (2) mit den Detektororten $P_i, P_j$ verknüpft sind und die Symmetrie $\bar{A}(u, v) = \bar{A}(-u, -v)$ berücksichtigt ist. Bei symmetrischer Anordnung der Detektoren können die Stützpunkte teilweise zusammenfallen, d.h. der betreffende Funktionswert wird mehrfach vermessen. Ein Beispiel wären sechs Detektoren auf den Ecken eines regelmäßigen Sechsecks. Eine "Entartung" dieser Art kann man z.B. dadurch vermeiden, daß man n als Primzahl wählt. So liefert z.B. der Fall n = 5 in Fig. 4 20 verschiedene Stützpunkte, während ein regelmäßiges Sechseck nur 18 verschiedene Stützpunkte liefert, von denen 12 zweifach entartet sind.

Solche Entartungen erlauben einen automatischen, von der betrachteten Szene unabhängigen Abgleich der Detektoren, die z.B. durch einen Rechner so lange modifiziert werden können, bis alle mehrfach anfallenden Korrelationswerte tatsächlich innerhalb vorgegebener Toleranzen gleich groß ausfallen. Es hängt von der Zweckbestimmung des Geräts ab, ob dieser Vorteil den Nachteil einer geringeren Anzahl von verschiedenen Meßwerten aufwiegt oder gar überkompensiert.

4

Fig. 4 zeigt als Beispiel die Stützpunkte (u, v) (in willkürlichen Einheiten), für die eine Anordnung von fünf Detektoren nach Fig. 1 die Funktionswerte $\bar{A}$(u, v) liefern würde.

Die Werte $Q_{ij}$ der Funktion $\bar{A}$(u, v) in den genannten n(n − 1) Stützpunkten (u, v) stellen also die "Information" dar, die man mit der beschriebenen Anordnung von n Detektoren gewinnen kann. Der Informationsgehalt einer solchen Messung ist gewiß geringer als jener einer konventionellen, monochromatischen Abbildung gleicher Auflösung; wegen des hohen Auflösungsvermögens der Vorrichtung, das im wesentlichen dem Auflösungsvermögen einer Linse vergleichbaren Durchmessers entspricht, ist die mindere Information aber oft noch in Situationen erzielbar, wo ein konventionelles Bild nicht mehr erzeugt werden kann. Ist das Objekt bekannt, so reicht auch die mindere Information gewöhnlich zur Bestimmung seiner Entfernung aus.

Bei unbekanntem Objekt kann eine Klassifikation nach Objektklassen vorgenommen werden, wobei die unterscheidbaren Klassen durch das gegenwärtige Verfahren zu definieren sind. Objekte im Kernbereich der Anwendung des vorgeschlagenen Verfahrens, nämlich in Situationen jenseits des praktischen Einsatzes der erforderlichen Linsen- oder Spiegelsystem, würden optisch nur eine Klasse, die "Klasse der nichtauflösbaren Punktobjekte" bilden. Die Erfindung erlaubt weitergehende Klassifizierungen innerhalb dieser sonst nicht mehr auflösbaren Klasse von Objekten.

Die Erfindung kann ferner in Bereichen eingesetzt werden, wo optisch abbildende Geräte zwar grundsätzlich zur Verfügung stehen, aber z.B. mangels Robustheit oder Stabilität nicht eingesetzt werden können, wie z.B. ein hochauflösendes Teleskop an Bord eines Hubschraubers. Dieser Gewinn ergibt sich aus dem Wegfall der störungsanfälligen optischen Lichtwege in Systemen auf der Basis der Welleninterferenz.

Auch die folgenden Eigenschaften verdienen Beachtung: Bei Abbildungen mittels konventioneller Linsen- oder Spiegelsysteme dürfen während der Belichtung offenbar keine Objektversetzungen (x′, y′) auftreten, deren Bildbeträge größer als das Airy-Scheibchen sind, das durch das endliche Auflösungsvermögen definiert ist. Andernfalls würde zu der natürlichen Bildunschärfe infolge endlicher Auflösung eine Unschärfe infolge des Übereinanderkopierens der versetzten Bilder hinzukommen, das Gesamtbild wäre "verwackelt". Gleichung (4) besagt, daß ein solches Verwackeln, sei es Folge einer echten Eigenbewegung des Objekts, sei es Folge einer Scheinbewegung infolge mangelnder Stabilität der optischen Achse, oder Folge von beidem gleichzeitig, mit der neuen Methode der Informationsgewinnung physikalisch nicht möglich ist. Zwar werden auch hier Objektinformationen aus verschiedenen Zeitintervallen (t1, t1 + dt), (t2, t2 + dt) innerhalb der Belichtungszeit $T1 \leq t1 < t2 \leq T2$ "übereinanderkopiert"; zeitabhängige Versetzungen x′ = x′ (t), y′ = y′ (t), die bei abbildenden Systemen zu Verwacklungen führen, wirken sich jetzt aber nur wie der belanglose Phasenfaktor in (3), theoretisch also überhaupt nicht, auf das Meßresultat aus.

Hieraus ergibt sich die eingangs erwähnte Unabhängigkeit von turbulenten atmosphärischen Störungen: Durchläuft das vom Objekt kommende Lichtbündel Gebiete mit variablem Brechungsindex n = n(x), so wird es in erster Näherung durch stattfindende Brechungen "verbogen"; das Objekt wird unkontrollierbar versetzt. Das ist der Grund für das Szintillieren der Sterne, das auf kleine, rasch veränderliche Turbulenzen in der Atmosphäre zurückzuführen ist und das tatsächliche Auflösungsvermögen astronomischer Instrumente weit unter das apparative Auflösungsvermögen drückt. Störungen dieser Art haben auf das Meßresultat einer Anordnung der beschriebenen Art keinen Einfluß.

Ferner braucht auf die Nachführung der optischen Achse der Vorrichtung keine besondere Sorgfalt verwendet zu werden: das Objekt muß zwar permanent in Gesichtsfeld der Anlage, nicht aber auf der optischen Achse festgehalten werden. Das ist deshalb wichtig, weil das Einweisungsgerät, das die Nachführung besorgt, gewöhnlich ein geringeres Auflösungsvermögen besitzen wird und deshalb nicht in der Lage wäre, die optische Achse mit der Genauigkeit zu führen, die für eine konventionelle Abbildung höherer Auflösung notwendig wäre.

Hieraus ergibt sich umgekehrt, daß die vorgeschlagene Vorrichtung die Lage des Objekts nicht genauer zu bestimmen gestattet als das Einweisgerät. Die Vorrichtung unterscheidet gewissermaßen zwischen "Lage-" und "Objekt"-Information, ein gewiß bemerkenswerter Unterschied zu konventionellen Abbildungen.

Ein wichtiger Punkt der Erfindung ist schließlich die gleichzeitige Korrelation der Photoströme. Dieser gestattet eine erhebliche Reduktion der Meßzeit. Die Gewinnung von bildähnlicher, zweidimensionaler Objektinformation erlaubt außerdem eine erhebliche Senkung des notwendigen Signal-Rausch-Verhältnisses der Einzelmessung, also des Meßwertes $Q_{ij}$ des einzelnen Korrelators $K_{ij}$. Kleine S/N-Verhältnisse können nämlich durch eine intelligente Signalverarbeitung ausgeglichen werden, die die wahre Objektinformation wie aus einem stark verrauschten Bild rekonstruiert. Wie schon erwähnt, wird davon ausgegangen, daß die Auswertung der Objektinformation ohnehin von Rechnern vorgenommen wird, weil das hervorragende menschliche Vermögen zur Erkennung von Formen, das sich an optischen Bildern herausgebildet hat, bei der Bewertung der erfindungsgemäß anfallenden Information allenfalls mittelbar eingesetzt werden kann.

Die Vorzüge des Farbensehens, die gleichzeitige Gewinnung von Objektinformation in verschiedenen Bereichen des elektromagnetischen Frequenzspektrums, lassen sich auch auf das Informationsgewinnungssystem der Erfindung voll übertragen. Bei Anwendungen im IR-Bereich wird man z.B. an Spektralbereiche innerhalb der bekannten atmosphärischen Fenster denken.

5

**Patentansprüche**

1. Vorrichtung zur Erkennung weit entfernter, elektromagnetisch strahlender Objekte, enthaltend

(a) eine Mehrzahl (n) von auf die Strahlung des Objekts ansprechenden, zweidimensional in fester relativer Lage zueinander angeordneter Detektoren ($D_1, \ldots D_n$) und

(b) eine Zielobjektvermessungsschaltung, auf welche die Signale der Detektoren aufgeschaltet sind und welche ein aus den Signalen abgeleitetes Muster mit Mustern bekannter Objekte vergleicht, dadurch gekennzeichnet, daß die Zielobjektvermessungsschaltung

(c) eine Mehrzahl von Korrelatoren ($K_{ij}$) aufweist, von denen jeder die Signale eines Paares von Detektoren ($D_i, D_j$) miteinander korreliert, und

(d) Mittel zum Vergleichen eines von den Korrelationswerten gebildeten Musters mit gleichartigen Mustern bekannter Objekte.

2. Vorrichtung nach Anspruch 1, dadurch gekennzeichnet, daß die Detektoren ($D_1, D_2, \ldots D_n$) auf einem Kreis angeordnet sind.

3. Vorrichtung nach Anspruch 2, dadurch gekennzeichnet, daß die Detektoren ($D_1, D_2, \ldots, D_n$) in den Ecken eines regelmäßigen Vielecks angeordnet sind.

4. Vorrichtung nach Anspruch 3, dadurch gekennzeichnet, daß die Anzahl n der Detektoren ($D_1, \ldots, D_n$) eine Primzahl größer als 2 ist.

5. Vorrichtung nach Anspruch 4, dadurch gekennzeichnet, daß fünf Detektoren ($D_1, D_2, D_3, D_4, D_5$) in den Ecken eines regelmäßigen Fünfecks angeordnet sind.

6. Vorrichtung nach einem der Ansprüche 1 bis 5, dadurch gekennzeichnet, daß für jede mögliche Paarung von Detektoren ($D_i, D_j$) ein Korrelator ($K_{ij}$) vorgesehen ist, auf den die Signale der Detektoren dieser Paarung aufgeschaltet sind.

7. Vorrichtung nach einem der Ansprüche 1 bis 6, dadurch gekennzeichnet, daß mehrere ähnliche Anordnungen von Detektoren vorgesehen sind, die in unterschiedlichen Frequenzbereichen der einfallenden elektromagnetischen Strahlung arbeiten.

8. Vorrichtung nach Anspruch 3, dadurch gekennzeichnet, daß

(a) die Anzahl (n) der Detektoren wenigstens einen Teiler 2 besitzt, so daß gewisse Korrelationswerte redundant gebildet werden,

(b) Mittel vorgesehen sind zum Feststellen von Abweichungen redundant gebildeter Korrelationswerte und weiterhin

(c) Mittel vorgesehen sind zum Feststellen des Detektors, durch den diese Abweichungen verursacht sind.

9. Vorrichtung nach Anspruch 8, gekennzeichnet durch Mittel zum Abgleichen eines solchen für die besagten Abweichungen verantwortlichen Detektors, bis die redundant gebildeten Korrelationswerte übereinstimmen.


**Revendications**

1. Dispositif pour la reconnaissance d'objets éloignés radiant électromagnétiquement, comprenant

(a) une pluralité (n) de détecteurs ($D_1, D_n$) répondant à la radiation des objets et disposés à deux dimensions dans une position relative fixe, et

(b) un circuit de mesure de cible auquel les signaux des détecteurs sont appliqués, et qui compare un dessin dérivé des signaux aux dessins d'objets connus, caractérisé par le fait que le circuit de mesure de cible

(c) présente une pluralité de corrélateurs ($K_{ij}$) dont chacun établit la corrélation entre les signaux d'une paire de détecteurs ($D_i, D_j$), et

(d) des moyens déstinés à comparer d'un dessin formé par les valeurs de corrélation à des dessins du même type d'objets connus.

2. Dispositif selon la revendication 1, caractérisé par le fait que les détecteurs ($D_1, D_2, \ldots D_n$) sont disposés sur un cercle.

3. Dispositif selon la revendication 2, caractérisé par le fait que les détecteurs ($D_1, D_2, \ldots, D_n$) sont disposés dans les coins d'un polygone régulier.

4. Dispositif selon la revendication 3, caractérisé par le fait que le nombre n de détecteurs ($D_1, \ldots, D_n$) est un nombre premier supérieur à deux.

5. Dispositif selon la revendication 4, caractérisé par le fait que cinq détecteurs ($D_1, D_2, D_3, D_4, D_5$) sont disposés dans les coins d'un pentagone régulier.

6. Dispositif selon l'une des revendications 1 à 5, caractérisé par le fait qu'un corrélateur ($K_{ij}$) est prévu pour chaque combinaison de détecteurs ($D_i, D_j$) possible, les signaux des détecteurs de cette combinaison étant appliqués à ce corrélateur.

7. Dispositif selon l'une des revendications 1 à 6, caractérisé par le fait qu'on a prévu plusieurs dispositions similaires de détecteurs opérant à des gammes de fréquence différentes de la radiation éléctromagnérique incidente.

8. Dispositif selon la revendication 3, caractérisé par le fait que

(a) le nombre (n) de détecteurs possède au moins un diviseur 2 de sorte que certaines valeurs de corrélation sont formées de manière redondante,

(b) des moyens sont prévus qui sont déstinés à déterminer des déviations de valeurs de corrélation formées de manière redondante, et en plus

(c) des moyens sont prévus déstinés à déterminer le détecteur par lequel ces déviations ont été causées.

9. Dispositif selon la revendication 8, caractérisé par des moyens déstinés à ajuster un tel détecteur responsable desdites déviations, jusqu'à ce que les valeurs de corrélation formées de manière redondante sont égales.

## Claims

1. Device for recognizing far away electromagnetically radiating objects, comprising

(a) a plurality (n) of detectors ($D_1, \ldots, D_n$) responding to the radiation of the object and arranged two-dimensionally in fixed relative positions, and

(b) a target object measurement circuit to which the signals from the detectors are supplied and which compare a pattern derived from the signals with patterns of known objects, characterized in that the target object measurement circuit comprises

(c) a plurality of correlators ($K_{ij}$) each one of which correlates the signals of one pair of detectors ($D_iD_j$) with each other, and

(d) means for comparing a pattern formed by the correlation values to patterns of the same kind of known objects.

2. Device as claimed in claim 1, characterized in that the detectors ($D_1, D_2, \ldots, D_n$) are located on a circle.

3. Device as claimed in claim 2, characterized in that the detectors ($D_1, D_2, \ldots, D_n$) are located in the corners of a regular polygon.

4. Device as claimed in claim 3, characterized in that the number n of the detectors ($D_1, \ldots, D_n$) is a prime number larger than 2.

5. Device as claimed in claim 4, characterized in that five detectors ($D_1, D_2, D_3, D_4, D_5$) are located in the corners of a regular pentagon.

6. Device as claimed in any one of the claims 1 to 5, characterized in that one correlator ($K_{ij}$) is provided for each possible combination of detectors ($D_i, D_j$), the signals from the detectors of this combination being applied to said correlator.

7. Device as claimed in any one of the claims 1 to 6, characterized in that a plurality of similar arrays of detectors are provided which operate in different frequency ranges of the incident eletromagnetic radiation.

8. Device as claimed in claim 3, characterized in that

(a) the number (n) of the detectors has at least one divisor 2 such that certain correlation values are formed redunantly,

(b) means are provided for detecting deviations of redundantly formed correlation values, and furthermore

(c) means are provided for determining the detector by which these deviations have been caused.

9. Device as claimed in claim 8, characterized by means for adjusting such a detector responsible for said deviations until the redundantly formed correlation values are equal.

Fig. 1

0 085 174

Fig.2

Fig. 3

Fig. 4